# EUROPEAN PATENT APPLICATION

(11) **EP 1 304 208 A1**
(43) Date of publication of application: **23.04.2003**
(21) Application number: 02023097.5
(22) Date of filing: 17.10.2002
(51) Int. Cl.: B29C 45/42, B25J 15/06

(54) **Handling appliance for a plastic injection-moulding machine and gripper for same**

(30) Priority: 19.10.2001 DE 10152185
(71) Applicant: HEKUMA GmbH, 85386 Eching (DE)
(72) Inventor: Herbst, Richard, 85402 Kranzberg (DE)
(74) Representative: Klingseisen, Franz, Dipl.-Ing.

(57) **Abstract**

The present invention relates to a handling appliance for a plastic injection-moulding machine. The handling appliance possesses a gripper for the extraction of injection-moulded plastic parts from the injection-moulding machine. The gripper has at least one gripping element (32) which retains the injection-moulded plastic part by suction during extraction. Furthermore, there are means for providing at the location of the gripping element (32) a vacuum for sucking up the plastic part. The handling appliance according to the invention is characterized in that the said means contain at least one fan (54) which is arranged on the gripper (Fig. 2).

## Description

The present invention relates to a handling appliance for a plastic injection-moulding machine, with a gripper for the extraction of injection-moulded plastic parts from the injection-moulding machine, the gripper having at least one gripping element which retains the injection-moulded plastic part by suction during extraction, and with means for providing at the location of the gripping element a vacuum for sucking up the plastic part.

The invention relates, furthermore, to a gripper for such a handling appliance, with at least one gripping element which retains a plastic part by suction.

A handling appliance and a gripper of the type mentioned are known, for example, from DE 199 15 770 A1

The publication mentioned describes a generic handling appliance, the gripper of which retains a plastic part by suction during extraction from the injection-moulding machine. However, the publication does not disclose any details of how this suction is carried out in practice, since it deals primarily with another aspect of a generic handling appliance.

In practice, in generic handling appliances, the vacuum necessary for suction is generated via a hose system which possesses a suction orifice at the location of the gripping element. Within the hose system, a vacuum prevails which is generated via a blower arranged at a suitable point on the handling appliance, but outside the gripper. This known embodiment has the advantage that large and high-power fans which circulate a relatively large air volume can be used for generating the vacuum. On the other hand, in the known handling appliances, the hoses have to be carried along with the moved gripper, and this may restrict the freedom of mechanical movement.

In modern plastic injection-moulding machines, the minimization of the cycle times is an important design parameter, since low cycle times allow higher productivity. The cycle time is in this context the timespan which a plastic injection-moulding machine requires overall for a production operation, specifically up to the time when it is available again for the next production operation. A factor which also plays a part in minimizing the cycle time is therefore how quickly the injection-moulded plastic parts can be extracted from the die of the injection-moulding machine. This, in turn, also depends on how quickly the handling appliance can pick up the injection-moulded plastic parts and transport them out of the region between the die halves.

Against this background, an object of the present invention is to specify a handling appliance of the type mentioned in the introduction, which allows a further reduction in the cycle times of plastic injection-moulding machines. An object of the present invention is, furthermore, to specify a gripper for a corresponding handling appliance.

In a handling appliance of the type mentioned in the introduction, this object is achieved in that the said means contain at least one fan which is arranged on the gripper. The object is achieved, furthermore, by means of a gripper for such a handling appliance, in which a fan for generating a vacuum is arranged at the location of the gripping element on the gripper.

Thus, in the handling appliance according to the invention, at least one fan for generating the necessary vacuum is integrated in the gripper. This measure makes it possible, for the first time, to configure the paths of movement of the gripper independently of hoses to be carried along. In other words, for the first time, long hoses which have to be carried along during the movement of the gripper can be dispensed with, thus allowing unimpeded and consequently faster movements of the gripper. Moreover, the arrangement according to the invention can be implemented in a space-saving way and in a small build. A further reduction in the cycle times can thereby be achieved, since the die halves of the plastic injection-moulding machine have to be opened to a lesser extent during the extraction of the plastic parts. As a result of the shorter distances, this likewise contributes to accelerating the production operation.

Moreover, the arrangement according to the invention has the advantage that the vacuum required for suction is generated essentially where it is actually required. Consequently, pressure losses due to long hose lengths can be reduced, thus, overall, making it possible to have a reduced fan power. The arrangement according to the invention can therefore also be operated in a more energy-saving way. Furthermore, failures and malfunctions of the handling appliance as a result of damage to the hoses subjected to movement are avoided.

In one refinement of the invention, the at least one fan is arranged on the gripping element.

By virtue of this measure, pressure losses are minimized even further, since the sucked-off air has to cover only very short distances. The handling appliance can therefore be operated in an even more energy-saving way. The advantages of the invention have, overall, an even greater bearing.

In a further refinement, the gripper has a plurality of gripping elements.

By virtue of this measure, a further reduction in the cycle times is possible, since the gripper can thus extract a plurality of plastic parts simultaneously from the die of the plastic injection-moulding machine in one operation.

In a further refinement, moreover, the gripper has a plurality of fans, each fan being coupled to a gripping element.

This measure logically develops the basic idea of the invention, since the generation of the vacuum necessary for suction is further decentralized. As a result of the measure, it is possible to use smaller fans. The construction space required and pressure losses in hose lines can be further minimized.

In a further refinement, the at least one gripping element is designed for the retention of sheet-like plastic parts, in particular of CD boxes.

In this refinement, the advantages of the invention are particularly expedient, since, above all, sheet-like plastic parts can be retained very effectively by suction. A particularly preferred application of the invention is the extraction and retention of CD boxes, since these, because of their standardized dimensions and sheet-like design, can be sucked up and retained very effectively by means of commercially available fans.

In a further refinement of the invention, the at least one gripping element has a suction plate with a front side and a rear side, the front side containing a bearing surface for the plastic part, and the fan being arranged on the rear side of the suction plate.

The bearing surface does not in this case necessarily have to be a plane surface, but, instead, it may be adapted to the outer shape of the plastic part to be retained. Preferably, the bearing surface is shaped complimentarily to at least one side of the plastic part, thus resulting in a particularly firm hold during suction. By the fan being arranged on the rear side of the suction plate, on the other hand, there are optimally short distances and therefore the fewest possible pressure losses during the generation of the vacuum required. Moreover, the said measure leads to an arrangement having a very low-slung build, with the result that the necessary opening stroke of the injection-moulding machine can be further reduced.

In a further refinement, the suction plate has at least one window orifice which is arranged in the region of the bearing surface and behind which the fan is arranged.

Instead of a window orifice, individual bores of smaller diameter, through which the plastic part to be retained is sucked up, may, in principle, also be arranged in the suction plate. By contrast, however, particularly high efficiency is achieved by means of a window orifice. The suction action is therefore particularly pronounced.

In a further refinement, the suction plate has a plurality of window orifices are arranged in the region of the bearing surface and which are separated from one another by webs.

By virtue of this measure, the plastic part to be extracted can be retained particularly securely, since a particularly large air volume is sucked up. On the other hand, because of the webs, the suction plate acquires sufficient stability, and, during suction, the plastic part is protected from damage due to contact with the rotor blades of the fan.

In a further refinement, the fan has an air passage area, and the total area of the window orifices amounts to at least 50%, preferably to at least 70%, of the air passage area of the fan.

It was shown, in practical tests, that this ratio of the window orifices to the air passage area of the fan, that is to say of the cross-sectional fan orifice perpendicular to the air stream, yields high efficiency, along with good stability. The plastic parts can therefore be retained reliably even by means of comparatively small fans. The use of small fans consequently makes it possible to produce the gripper of the handling appliance so as to be particularly lightweight and with a low-slung build, with the result that the cycle times of the entire plant can be further minimized, as described.

It goes without saying that the features mentioned above and those yet to be explained below can be used not only in the combination specified in each case, but also in other combinations or alone, without departing from the scope of the present invention.

Exemplary embodiments of the invention are illustrated in the drawing and are explained in more detail in the following descriptions. In the drawing:
- Fig. 1: shows a diagrammatic illustration of a handling appliance according to the invention for the extraction of CD boxes from the die of an injection-moulding machine,
- Fig. 2: shows a top view of a gripping element of a handling appliance according to the invention for the extraction of CD boxes,
- Fig. 3: shows a partially sectional side view of the gripping element according to Fig. 2, and
- Fig. 4: shows the gripper of a handling appliance according to the invention with two gripping elements.

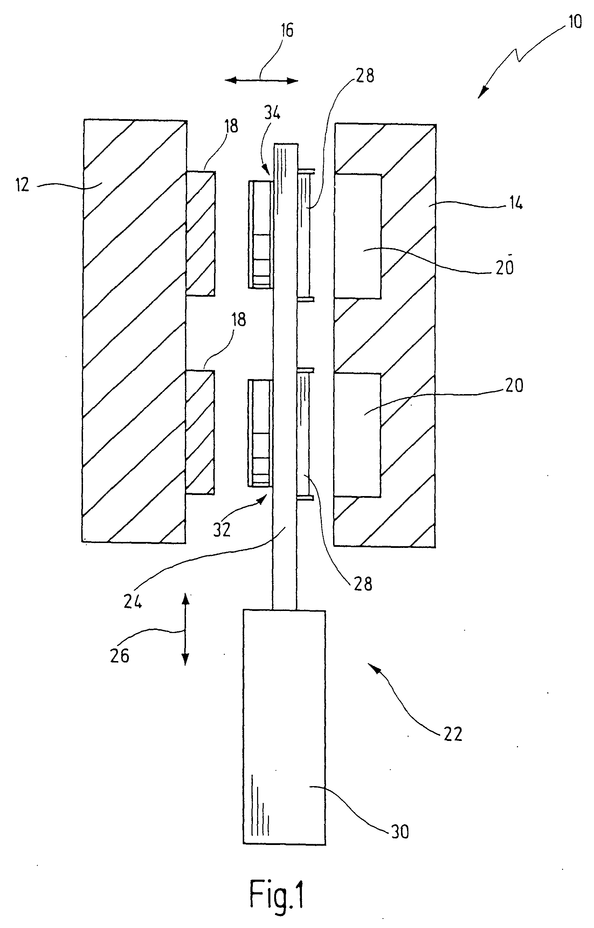

In Fig. 1, a device with a handling appliance according to the invention is designated as a whole by the reference numeral 10.

The device 10 contains a plastic injection-moulding machine, of which two die halves 12 and 14 are illustrated merely diagrammatically here for the sake of simplicity. Die halves 12 and 14 can be opened and closed in the direction of the arrow 16. In the closed state, moulding cores 18 of the die half 12 project into corresponding moulding cavities 20 of the die half 14. In this case, the moulding cores 18 do not completely fill the corresponding moulding cavities 20. The remaining cavity is filled, during injection-moulding, with a plastic melt (not illustrated here) which, after curing, results in the formed plastic part. In the present case, according to a particularly preferred exemplary embodiment, the plastic parts are CD boxes known per se.

The reference numeral 22 designates a handling appliance according to the invention, the gripper 24 of which can move in between the open die halves 12, 14 in the direction of the arrow 26, in order to extract plastic parts 28 produced, that is to say, here, the CD boxes.

In addition to the gripper 24 itself, the handling appliance 22 contains, as is known, further units, such as, for example, one or more drives and a control unit. Furthermore, the handling appliance 22 may be of multistage design, that is to say the plastic parts 28 extracted by the gripper 24 are transferred to further following grippers, in order to carry out a subsequent further processing of the plastic parts. The further units of the handling appliance 22 are known per se, however, and are therefore outlined merely diagrammatically here by the block 30 for the sake of clarity.

The gripper 24 of the handling appliance 22 possesses, in a way illustrated in more detail below, two gripping elements 32, 34, by means of which two plastic parts 28 can be extracted simultaneously from the corresponding moulding cavities 20 of the die half 14. However, the gripper 24 is not restricted to two gripping elements 32, 34. Depending on the particular application, the gripper 24 may also possess more or fewer gripping elements 32, 34.

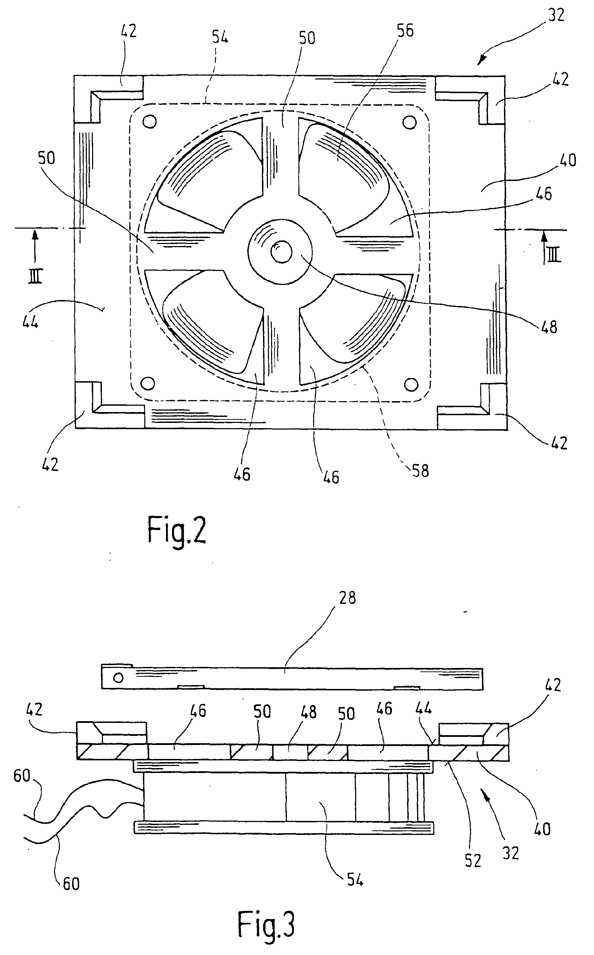

The set-up of the gripping elements 32, 34 is explained below by means of Figures 2 and 3 and by the example of the gripping element 32. In this case, identical reference symbols in each case designate identical elements.

The gripping element 32 is designed for the retention of CD boxes. It possesses a flat suction plate 40 with a rectangular base area which corresponds essentially to the size of a CD box. Arranged at the four outer corners of the suction plate 40 are angular projections 42, by means of which, during extraction, a CD box 28 is centred on the suction plate and is secured against slipping out of place laterally. The front side 44 of the suction plate 40 in this case forms a bearing surface for the CD box.

Altogether five window orifices 46, 48 are arranged in the region of the bearing surface 44, four window orifices 46 in the form of a segment of a circle surrounding the circular window orifice 48. The window orifices 46, 48 are separated from one another by webs 50, although the total area of these is small in comparison with the total area of the window orifices 46, 48.

A fan 54 is fastened to the rear side 52 of the suction plate 40. The fan 54 is a commercially available component which is used for cooling purposes in comparable form in many electrical appliances, such as, for example, power packs for PCs. The rotor blades 56 of the fan 54 can be seen through the window orifices 46 in Fig. 2.

The reference numeral 58 designates in Fig. 2 the air passage area of the fan 54, that is to say the cross-sectional area of the fan 54 through which a sucked-off air volume flows.

The air passage area 58 corresponds here essentially to the circular area swept by the rotor blades 56. As can be seen in Fig. 2, the window orifices 46, 48 are arranged practically in congruence with the air passage area 58, and the total area of the window orifices 46, 48 leaves a large part of the air passage area 58 free. Only the webs 50 conceal part of the air passage area 58.

The fan 54 possesses, in a way known per se, two electrical connecting lines, via which it is supplied with current. The rotational speed of the fan 54 and consequently the suction force can be varied thereby. In contrast to previous handling appliances, in the handling appliance according to the invention it is necessary merely for the connecting lines 60 or an extension of these to be carried along during the movements of the gripper.

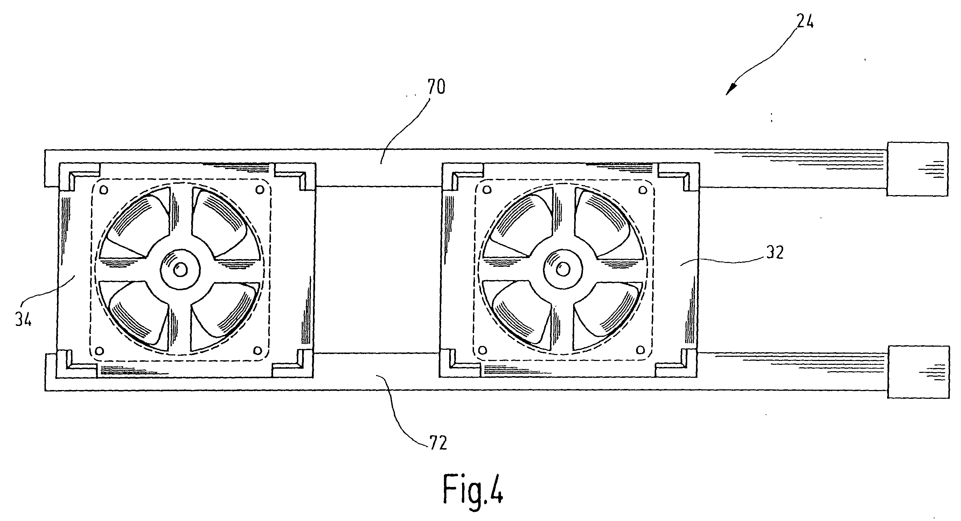

Fig. 4 illustrates a top view of the gripper 24 of the handling appliance 22 from Fig. 1. In this case, identical reference symbols designate the same elements as before.

The gripper 24 possesses two gripping elements 32, 34 of the type described above. The gripping elements 32, 34 are in this case fastened to two struts 70, 72 which can be coupled in a way known per se to a drive (not illustrated here) of the handling appliance 22. The spacing and position of the gripping elements 32, 34 correspond in this case exactly to the position and dimensions of the moulding cavities 20, from which the plastic parts produced are to be extracted.

Even though the gripper 24 has been described here with regard to the extraction of plastic parts from the die 12, 14 of the injection-moulding machine, it goes without saying that the gripper 24 may, conversely, also insert parts into the moulding cavities 20 of the injection-moulding machine. This is advantageous particularly when plastic parts are injection-moulded in a plurality of passes. Accessories may likewise be inserted into the moulding cavities 20 by means of the gripper 24 before the actual injection-moulding operation.

## Claims

1. Handling appliance for a plastic injection-moulding machine (12, 14), with a gripper (24) for the extraction of injection-moulded plastic parts (28) from the injection-moulding machine (12, 14), the gripper (24) having at least one gripping element (32, 34) which retains the injection-moulded plastic part (28) by suction during extraction, and with means for providing at the location of the gripping element (32, 34) a vacuum for sucking up the plastic part (28), **characterized in that** the said means contain at least one fan (54) which is arranged on the gripper (24).

2. Handling appliance according to Claim 1, **characterized in that** the at least one fan (54) is arranged on the gripping element (32, 34).

3. Handling appliance according to Claim 1 or 2, **characterized in that** the gripper (24) has a plurality of gripping elements (32, 34).

4. Handling appliance according to Claim 3, '**characterized in that** the gripper (24) has a plurality of fans (54), each fan (54) being coupled to a gripping element (32, 34).

5. Handling appliance according to one of Claims 1 to 4, **characterized in that** the at least one gripping element (32, 34) is designed for the retention of sheet-like plastic parts (28), in particular of CD boxes.

6. Handling appliance according to one of Claims 1 to 5, **characterized in that** the at least one gripping element (32, 34) has a suction plate (40) with a front side (44) and a rear side (52), the front side (44) containing a bearing surface for the plastic part (28), and the fan (54) being arranged on the rear side (52) of the suction plate (40).

7. Handling appliance according to Claim 6, **characterized in that** the suction plate (40) has at least one window orifice (46, 48) which is arranged in the region of the bearing surface (44) and behind which the fan (54) is arranged.

8. Handling appliance according to Claim 7, **characterized in that** the suction plate (40) has a plurality of window orifices (46, 48) which are arranged in the region of the bearing surface (44) and which are separated from one another by webs (50).

9. Handling appliance according to Claim 7 or 8, **characterized in that** the fan (54) has an air passage area (58), and **in that** the total area of the window orifices (46, 48) amounts to at least 50%, preferably to at least 70%, of the air passage area (58) of the fan (54).

10. Gripper for a handling appliance according to one of Claims 1 to 9, with at least one gripping element (32, 34) which retains a plastic part (28) by suction, **characterized by** a fan (54) for generating a vacuum at the location of the gripping element (32, 34), the fan (54) being arranged on the gripper (24).
